(19) Europäisches Patentamt
European Patent Office
Office européen des brevets

(11) EP 4 813 632 A1

(12) EUROPEAN PATENT APPLICATION
published in accordance with Art. 153(4) EPC

(43) Date of publication:
**30.09.2026 Bulletin 2026/40**

(21) Application number: **24894040.5**

(22) Date of filing: **12.11.2024**

(51) International Patent Classification (IPC):
***B32B 27/36** (2006.01)* ***B29C 51/10** (2006.01)*
***B29C 51/14** (2006.01)* ***B32B 27/08** (2006.01)*
***B32B 27/30** (2006.01)* ***C09D 133/00** (2006.01)*

(52) Cooperative Patent Classification (CPC):
**B29C 51/10; B29C 51/14; B32B 27/08; B32B 27/30; B32B 27/36; C09D 133/00**

(86) International application number:
**PCT/JP2024/040061**

(87) International publication number:
**WO 2025/110048 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.11.2023 JP 2023197418**
**07.05.2024 JP 2024075208**

(71) Applicant: **MITSUBISHI GAS CHEMICAL COMPANY, INC.**
**Chiyoda-ku**
**Tokyo 100-8324 (JP)**

(72) Inventors:
- **KAJIMOTO, Chihiro**
**Tokyo 100-8324 (JP)**
- **KAMEI, Shota**
**Tokyo 125-8601 (JP)**
- **NAKAMURA, Hitomi**
**Tokyo 125-8601 (JP)**

(74) Representative: **Hoffmann Eitle**
**Patent- und Rechtsanwälte PartmbB**
**Arabellastraße 30**
**81925 München (DE)**

# (54) LAMINATE FOR THERMOFORMING AND MOLDED ARTICLE OBTAINED BY MOLDING SAME

(57) According to the present invention, there can be provided a thermoforming laminate, comprising a base material layer having a layer containing a polycarbonate resin, and a hard coat layer laminated on one surface of the base material layer, wherein the hard coat layer is formed by polymerizing and curing a hard coating composition containing a (meth)acryloyl polymer having a double bond equivalent of 800 to 7000.

EP 4 813 632 A1

## Description

Technical Field

The present invention relates to a thermoforming laminate and a molded product formed by molding the same, and particularly, to a thermoforming laminate that can be preferably used for printing (e.g., gravure printing, screen printing, wet coating, etc.), and a molded product formed by molding the same.

Background Art

Acrylic resin is excellent in terms of surface hardness, transparency, scratch resistance, weather resistance, and the like. On the other hand, polycarbonate resin is excellent in terms of impact resistance and the like. For these reasons, a laminate having an acrylic resin layer and a polycarbonate resin layer is excellent in terms of surface hardness, transparency, scratch resistance, weather resistance and impact resistance, and is used in automobile parts, home appliances, electronic devices, and the display windows of portable information terminals.

In recent years, as design needs have diversified, there has been a demand for using products with design quality enhanced by thermoforming such as vacuum forming and pressure forming, also for the front panels of display devices, etc. Since a laminate having an acrylic resin layer and a polycarbonate resin layer has excellent performance as described above, an attempt has been made to apply such a laminate to front panels.

Because polycarbonate is not an easily adherable adherend, methods of using various types of adhesives or surface treatments in combination with polycarbonate have been proposed. However, because the polycarbonate resin itself does not have good solvent resistance, if a solvent with good solubility is used, the polycarbonate surface becomes whitened. This causes problems such as a loss of transparency and a poor appearance. In addition, because polycarbonate does not have good moisture permeability, when it is adhered to other materials using adhesives or surface treatments in combination and is then subjected to a moisture resistance test, etc., it is problematic in that moisture can penetrate the interface between the polycarbonate and the adhesive, thereby reducing adhesive strength.

For example, as solvents for commonly commercially available adhesives, toluene, xylene, ethyl acetate, methyl ethyl ketone, etc. are mainly used. These solvents cause cracking or whitening in polycarbonate resins.

Patent Literature 1 discloses a resin sheet for molding made of a polycarbonate resin having a specific terminal group and an acrylic-based resin, as a resin sheet for molding preferable for thermoforming such as vacuum forming or pressure forming. In such a resin sheet, whitening and generation of cracks are suppressed during bending in thermoforming. However, if a hard coat is applied onto the surface of the acrylic-based resin layer of such a resin sheet, it has been problematic in that cracks are generated during bending in thermoforming.

Citation List

Patent Literature

Patent Literature 1: International Publication WO2016/060100

Summary of Invention

Technical Problem

It is an object of the present invention to provide: a thermoforming laminate that does not generate cracks after thermoforming, has excellent chemical resistance, and can be preferably used for printing (e.g., gravure printing, screen printing, wet coating, etc.); and a molded product formed by molding the same.

Solution to Problem

The present inventors have conducted intensive studies directed towards achieving the above-described object, and as a result, the present inventors have found that the above-described object can be achieved by using a hard coating composition containing a (meth)acryloyl polymer having a specific double bond equivalent.

Specifically, the present invention is as follows.

< 1 > A thermoforming laminate, comprising:

a base material layer having a layer containing a polycarbonate resin, and a hard coat layer laminated on one

surface of the base material layer, wherein
the hard coat layer is formed by polymerizing and curing a hard coating composition containing a (meth)acryloyl polymer having a double bond equivalent of 800 to 7000.

< 2 > The thermoforming laminate according to the above < 1 >, wherein the base material layer is a laminate of a layer containing a polycarbonate resin and a layer containing an acrylic resin, and the hard coat layer is laminated on the layer containing a polycarbonate resin.
< 3 > The thermoforming laminate according to the above < 1 > or < 2 >, wherein the hard coating composition further comprises a leveling agent.
< 4 > The thermoforming laminate according to the above < 3 >, wherein the leveling agent is a silicone-based leveling agent or a fluorine-based leveling agent, and the content of the leveling agent is 0.01 to 3 parts by mass, with respect to 100 parts by mass of the (meth)acryloyl polymer contained in the hard coating composition.
< 5 > The thermoforming laminate according to any one of the above < 1 > to < 4 >, wherein the hard coating composition is energy ray curable.
< 6 > The thermoforming laminate according to any one of the above < 1 > to < 5 >, wherein the hard coating composition further comprises a photopolymerization initiator.
< 7 > The thermoforming laminate according to the above < 6 >, wherein the content of the photopolymerization initiator is 0.1 to 5 parts by mass, with respect to 100 parts by mass of the (meth)acryloyl polymer contained in the hard coating composition.
< 8 > The thermoforming laminate according to any one of the above < 1 > to < 7 >, wherein the hard coating composition comprises one or more types of monomers.
< 9 > **The** thermoforming laminate according to the above < 8 >, wherein the content of the monomers is greater than 0% by mass and 50% by mass or less, based on the total weight of the hard coating composition.
< 10 > The thermoforming laminate according to any one of the above < 1 > to < 9 >, wherein the indenter hardness H_IT [N/mm$^2$] on the surface of the hard coat layer satisfies 30 [N/mm$^2$] < indenter hardness H_IT < 240 [N/mm$^2$].
< 11 > The thermoforming laminate according to any one of the above < 1 > to < 10 >, wherein there are no 19 mmH cracks in pressure forming.
< 12 > The thermoforming laminate according to any one of the above < 1 > to < 11 >, which further comprises a printing layer on the hard coat layer.
< 13 > The thermoforming laminate according to any one of the above < 1 > to < 11 >, which is formed by further laminating a printing layer, an adhesive layer and a backer material in this order on the hard coat layer.
< 14 > A molded product formed by molding the thermoforming laminate according to any one of the above < 1 > to < 13 >.

Advantageous Effects of Invention

According to the present invention, there can be provided: a thermoforming laminate that does not generate cracks after thermoforming, has excellent chemical resistance, and can be preferably used for printing (e.g., gravure printing, screen printing, wet coating, etc.); and a molded product formed by molding the same.

Description of Embodiments

Hereinafter, the present invention will be described in detail by exemplifying production examples, examples, and the like, but the present invention is not limited to the exemplified production examples, examples, and the like. The present invention can also be carried out by changing the methods described below to any methods within a range that does not greatly deviate from the contents of the present invention.
The thermoforming laminate of the present invention comprises a base material layer having a layer containing a polycarbonate resin, and a hard coat layer laminated on one surface of the base material layer.
In one embodiment of the present invention, preferable is an aspect, in which the base material layer is a laminate of a layer containing a polycarbonate resin and a layer containing an acrylic resin, and the hard coat layer is laminated on the layer containing a polycarbonate resin.

< Base material layer >

The base material layer is preferably laminated on the hard coat layer, so that it is allowed to come into contact with the surface of the hard coat layer that is opposite to the protective film. However, the lamination is not limited to this, and another layer may be disposed between the base material layer and the hard coat layer.
The base material layer preferably comprises a thermoplastic resin. The type of the thermoplastic resin is not

particularly limited, and examples of the thermoplastic resin used herein may include polycarbonate (PC) resins, acrylic resins such as polymethyl methacrylate (PMMA), and various types of resins such as polyethylene terephthalate (PET), triacetyl cellulose (TAC), polyethylene naphthalate (PEN), polyimide (PI), a cycloolefin copolymer (COC), a norbornene-containing resin, polyethersulfone, cellophane, and aromatic polyamide. The base material layer preferably comprises at least a polycarbonate resin among the aforementioned thermoplastic resins, and from the viewpoint of toughness and heat resistance, the base material layer more preferably comprises an aromatic polycarbonate resin.

The polycarbonate resin is not particularly limited, as long as it contains a carbonic acid ester bond, i.e., a -[O-R-OCO]- unit (wherein R may be an aliphatic group, an aromatic group, or may comprise both an aliphatic group and an aromatic group, and may be a linear structure or a branched structure) in the molecular main chain thereof. The polycarbonate resin is preferably an aromatic polycarbonate resin, and it is particularly preferable to use a polycarbonate resin comprising a constituent unit represented by the formula (4a) shown below. By using such a polycarbonate resin, a thermoforming laminate with more excellent impact resistance can be obtained.

[Formula 1]

$$\left[ -O-C_6H_4-C(CH_3)_2-C_6H_4-O-C(=O)- \right] \quad (4a)$$

Specifically, as a polycarbonate resin, an aromatic polycarbonate resin (for example, Iupilon S-2000, Iupilon S-1000, or Iupilon E-2000; manufactured by Mitsubishi Engineering-Plastics Corporation), etc. can be used.

In recent years, for the purpose of controlling the glass transition point of a polycarbonate resin, a polycarbonate resin, to which a monohydric phenol represented by the general formula (4) shown below has been added as an end terminator, has also been used. Also in the above-described embodiment, such an end terminator-added polycarbonate resin can be used.

[Formula 2]

$$HO-C_6(R_2\sim R_5)-C(=O)-O-R_1 \quad (4)$$

In the above formula, $R_1$ represents an alkyl group containing 8 to 36 carbon atoms or an alkenyl group containing 8 to 36 carbon atoms; $R_2$ to $R_5$ each independently represent a hydrogen atom, a halogen, or an alkyl group containing 1 to 20 carbon atoms or an aryl group containing 6 to 12 carbon atoms, which may optionally have a substituent; wherein the substituent is halogen, an alkyl group containing 1 to 20 carbon atoms, or an aryl group containing 6 to 12 carbon.

In the present description, the "alkyl group" and the "alkenyl group" may be either a linear or branched group, and may optionally have a substituent.

The monohydric phenol represented by the general formula (4) is more preferably represented by the following general formula (5).

[Formula 3]

$$HO-C_6H_4-C(=O)-O-R_1 \quad (5)$$

In the above formula, $R_1$ represents an alkyl group containing 8 to 36 carbon atoms or an alkenyl group containing

8 to 36 carbon atoms.

In the general formula (4) or the general formula (5), the number of carbon atoms of $R_1$ is more preferably within a specific numerical value range. Specifically, the upper limit value of the number of carbon atoms of $R_1$ is preferably 36, more preferably 22, and particularly preferably 18. On the other hand, the lower limit value of the number of carbon atoms of $R_1$ is preferably 8, and more preferably 12.

Among the monohydric phenols represented by the general formula (4) or the general formula (5), it is particularly preferable to use either parahydroxybenzoic acid hexadecyl ester or parahydroxybenzoic acid 2-hexyldecyl ester, or both of them as end terminator(s).

For example, when monohydric phenol, wherein, in the general formula (5), $R_1$ is an alkyl group containing 16 carbon atoms, is used as an end terminator, a polycarbonate resin that is excellent in terms of glass transition temperature, melt fluidity, moldability, and drawdown resistance can be obtained. Moreover, the aforementioned monohydric phenol is also excellent in terms of solvent solubility during polycarbonate resin production, and thus, is particularly preferable.

On the other hand, if the number of carbon atoms in $R_1$ in the general formula (4) or the general formula (5) is too large, the solubility of the monohydric phenol (end-capping agent) in organic solvents tends to decrease, which may reduce productivity during polycarbonate resin production.

As an example, if the number of carbon atoms of $R_1$ is 36 or less, the productivity is high and the economic efficiency is favorable upon production of the polycarbonate resin. If the number of carbon atoms of $R_1$ is 22 or less, monohydric phenol has particularly excellent solubility in organic solvents, and it enables extremely high productivity and improved economic efficiency upon production of the polycarbonate resin. The polycarbonate resin using such monohydric phenol may be, for example, Iupizeta T-1380 (manufactured by MITSUBISHI GAS CHEMICAL COMPANY, INC.).

If the number of carbon atoms in $R_1$ in the general formula (4) or the general formula (5) is too small, the glass transition point of the polycarbonate resin may not become a sufficiently low value, and thereby thermoformability may be decreased.

The weight-average molecular weight of the polycarbonate resin can affect the impact resistance and molding conditions of the thermoforming laminate. That is, if the weight-average molecular weight is too low, the impact resistance of the thermoforming laminate may decrease. If the weight-average molecular weight is too high, an excessive heat source may be required when the base material layer containing the polycarbonate resin is formed. Also, depending on the molding method to be selected, since a high temperature may be required, the polycarbonate resin may be exposed to such a high temperature, which may affect the thermal stability of the polycarbonate resin. The weight average molecular weight of the polycarbonate resin is preferably 15,000 to 75,000, more preferably 20,000 to 70,000. The weight average molecular weight of the polycarbonate resin is further preferably 20,000 to 65,000. It is to be noted that, in the present description, the weight average molecular weight is a weight average molecular weight that is measured by gel permeation chromatography (GPC) and converted to standard polystyrene

Those skilled in the art can select and use a polycarbonate resin having a Tg that satisfies the above-described relationship from among known polycarbonate resins, while taking into account the glass transition point (Tg) of the high-hardness resin to be used. The Tg of the polycarbonate resin is preferably 90°C to 190°C, more preferably 100°C to 170°C, and particularly preferably 110°C to 150°C. It is to be noted that, in the present description, the glass transition point is a temperature that is measured using a differential scanning calorimeter with 10 mg of a sample at a temperature-increasing rate of 10°C/min and is then calculated by a midpoint method.

The base material layer may comprise other resins in addition to the polycarbonate resin. An example of such other resins may be a polyester resin. The polyester resin preferably mainly comprises terephthalic acid as a dicarboxylic acid component, and may also comprise dicarboxylic acid components other than terephthalic acid.

For example, a polyester resin (what is called "PETG") obtained by polycondensation of glycol components containing 80 to 60 mol % of ethylene glycol as a main component and 20 to 40 mol % of 1,4-cyclohexanedimethanol (total 100 mol %) is preferable. The resin in the base material layer preferably consists solely of a polycarbonate resin (a1). However, if the base material layer comprises other resins, the amount of such other resins is preferably 0% to 50% by mass, more preferably 0% to 30% by mass, and particularly preferably 0% to 20% by mass, with respect to the total mass of the base material layer.

The base material layer may further comprise additives, etc. As such additives, those that are commonly used in thermoforming laminates can be used. Examples of such additives may include an antioxidant, an anti-coloring agent, an anti-static agent, a release agent, a lubricant, a dye, a pigment, a plasticizer, a flame retardant, a resin modifier, a compatibilizer, and reinforcing materials such as an organic filler or an inorganic filler. The method of mixing the additives and the resin is not particularly limited, and a method of compounding the entire amount, a method of dry-blending a masterbatch, a method of dry-blending the entire amount, etc. can be used. The amount of the additives is preferably 0% to 10% by mass, more preferably 0% to 7% by mass, and particularly preferably 0% to 5% by mass, with respect to the total mass of the base material layer.

As a thermoplastic resin comprised in the base material layer, an acrylic resin is preferable. Specific examples of the acrylic resin may include, but are not particularly limited, homopolymers of various (meth)acrylic acid esters, including

polymethyl methacrylate (PMMA) and methyl methacrylate (MMA) as typical examples, and copolymers of PMMA, MMA, or monomers constituting these, and one or more other monomers. Moreover, a mixture of multiple resins can also be used. Among these, (meth)acrylates comprising a cyclic alkyl structure, which are excellent in terms of low birefringence, low moisture absorption and heat resistance, are preferable. Examples of such (meth)acrylates may include, but are not limited to, ACRYPET (manufactured by Mitsubishi Rayon Co., Ltd.), Delpet (manufactured by Asahi Kasei Chemicals Corporation), and PARAPET (manufactured by Kuraray Co., Ltd.).

Moreover, the base material layer may be formed with multiple layers with different compositions. For example, the aforementioned base material layer consisting of a layer containing a polycarbonate resin and a layer containing an acrylic resin can also be used. The base material layer consisting of multiple layers is not limited to a two-layer structure, and it may also be three or more layers. For example, when a base material layer comprising a layer containing a polycarbonate resin and a layer containing an acrylic resin is used, it is preferable that a hard coat layer be laminated on the side of the layer containing a polycarbonate resin. By using a base material layer with a multilayer structure, comprising a layer containing a polycarbonate resin and a layer containing an acrylic resin, it is possible to maintain the thermoformability of the base material layer, while improving the surface hardness of the base material layer.

The viscosity average molecular weight of the thermoplastic resin comprised in the base material layer is preferably 15,000 to 40,000, more preferably 20,000 to 35,000, and further preferably 22,500 to 25,000.

The content of the thermoplastic resin in the base material layer is preferably 80% by mass or more, more preferably 90% by mass or more, and particularly preferably 95% by mass or more, with respect to the mass of the base material layer. In addition, the percentage of a polycarbonate resin in a layer comprising the polycarbonate resin as a main component is preferably 80% by mass or more, more preferably 90% by mass or more, and particularly preferably 95% by mass or more. The percentage of an acrylic resin in a layer comprising the acrylic resin as a main component is preferably 80% by mass or more, more preferably 90% by mass or more, and particularly preferably 95% by mass or more. By setting the content of the thermoplastic resin within the above-described range, fluidity upon injection molding tends to be more improved.

In one preferred embodiment of the present invention, the thickness of the layer containing an acrylic resin has an influence upon the surface hardness or impact resistance of the thermoforming laminate. That is, if the thickness of the layer containing an acrylic resin is too thin, the surface hardness tends to decrease. If the thickness of the layer containing an acrylic resin is too thick, the impact resistance tends to decrease. The lower limit value of the thickness of the layer containing an acrylic resin is preferably 5 μm, more preferably 7 μm, and further preferably 8 μm. The upper limit value of the thickness of the layer containing an acrylic resin is preferably 200 μm, more preferably 180 μm, and further preferably 150 μm.

In one preferred embodiment of the present invention, the total thickness of the layer containing a polycarbonate resin and the layer containing an acrylic resin has an influence upon impact resistance. If the total thickness of the layer containing a polycarbonate resin and the layer containing an acrylic resin is too thin, impact resistance tends to decrease. The total thickness of the layer containing a polycarbonate resin and the layer containing an acrylic resin is preferably 50 to 3,000 μm, more preferably 60 to 2,000 μm, and further preferably 70 to 1,000 μm.

In one preferred embodiment of the present invention, an ultraviolet absorber can be mixed into the layer containing a polycarbonate resin and/or the layer containing an acrylic resin and can be then used. If the amount of the ultraviolet absorber is too small, light resistance will be insufficient. If the amount of the ultraviolet absorber is too large, depending on the molding method, an excessive amount of ultraviolet absorber may scatter due to high temperatures, and may contaminate the molding environment, causing problems. Examples of the ultraviolet absorber may include a benzophenone-based ultraviolet absorber, a benzotriazole-based ultraviolet absorber, a benzoate-based ultraviolet absorber, a hindered amine-based ultraviolet absorber, and a triazine-based ultraviolet absorber. The mixing method is not particularly limited, and a method of compounding the entire amount, a method of dry-blending a masterbatch, a method of dry-blending the entire amount, etc. can be used.

The surface of the base material layer in the present invention may have an uneven shape. The uneven shape on the surface scatters external light, so that it can prevent a reduction in visibility due to reflection of external light and image reflection. **In** addition, when the present laminate is placed on the surface of a liquid crystal display device, good contrast is achieved, and when the present laminate is placed on the surface of a liquid crystal display device, the occurrence of so-called "glare" can be suppressed, which occurs when the pixels of the liquid crystal display device and the uneven shape on the surface of the anti-glare film interfere with each other, resulting in brightness distribution and making it difficult to see. Furthermore, the diffuse reflection effect of light due to the minute unevenness on the layer surface suppresses surface gloss, so that a satin-like matte appearance can be realized.

As methods of imparting an uneven shape to the surface of the base material layer, for example, fine particles may be added into the base material layer, or a paint containing fine particles may be applied onto the surface of the base material layer, or unevenness may be formed on the surface of the base material in the step of producing the base material or after production of the base material by passing a heated roll or the like that has been given an uneven surface through the base material, or an uneven shape may also be formed by an unevenness-making method such as a sandblasting

method, a shot blasting method, a liquid honing method, or a solvent treatment method.

Examples of the above-described fine particles may include, but are not particularly limited to, acrylic-based fine particles, styrene-based fine particles, acrylonitrile-based fine particles, urethane-based fine particles, nylon-based fine particles, polyimide-based fine particles, melamine-based fine particles, silicon-based fine particles, silica-based fine particles, and zirconia-based fine particles. Among these fine particles, the base material layer preferably comprises crosslinked acrylic-based fine particles. The crosslinked acrylic-based fine particles are not particularly limited. Examples of the crosslinked acrylic-based fine particles may include crosslinked polymethyl methacrylate-based fine particles, crosslinked polyethyl methacrylate-based fine particles, and crosslinked poly(normal butyl methacrylate)-based fine particles.

Examples of the method of coating a paint containing the above-**described** fine particles may include a microgravure coating method, a wire bar coating method, a direct gravure coating method, a die coating method, a dip coating method, a spray coating method, a reverse roll coating method, a curtain coating method, a comma coating method, a knife coating method, and a spin coating method.

< Hard coat layer >

A further layer may be present between the hard coat layer and the base material layer in the present invention. The hard coat layer is preferably laminated on one surface of the base material layer.

The hard coat layer in the present invention is formed by polymerizing and curing a hard coating composition containing a (meth)acryloyl polymer having a double bond equivalent of 800 to 7000. The double bond equivalent of the (meth)acryloyl polymer is preferably 850 to 6000, and more preferably 900 to 5000. If the double bond equivalent of the (meth)acryloyl polymer is less than 800, adhesion between the base material layer and the hard coat layer becomes poor, resulting in poor moldability after thermoforming, such as whitening and generation of cracks. On the other hand, if the double bond equivalent of the (meth)acryloyl polymer exceeds 7000, the chemical resistance of the hard coat layer becomes poor.

It is to be noted that, in the present invention, the double bond equivalent is defined as follows:

Double bond equivalent = molecular weight / number of polymerizable double bonds in molecule.

The hard coat layer may contain one or two or more types of (meth)acryloyl polymers.

The hard coating composition used in the present invention is preferably energy ray curable.

The (meth)acryloyl polymer used in the present invention is an acrylic polymer having a radically polymerizable (meth)acryloyl group in the side chain thereof, and it is a polymer that can be cured by UV, EB, or heat.

As a (meth)acryloyl polymer used in the present invention, a polymerized (meth)acrylic monomer, or oligomer, or prepolymer that contains a (meth)acryloyl group as a polymerization group, can also be used.

As a (meth)acrylate monomer, one, in which a (meth)acryloyl group is present as a functional group in the molecule thereof, can be used, and the (meth)acrylate monomer may be a monofunctional monomer, a bifunctional monomer, or a trifunctional or more functional monomer.

Examples of the monofunctional monomers may include (meth)acrylic acid and (meth)acrylic acid ester. Specific examples of bifunctional and/or trifunctional or more functional (meth)acrylic monomers may include diethylene glycol di(meth)acrylate, dipropylene glycol di(meth)acrylate, tripropylene glycol di(meth)acrylate, 1,6-hexanediol di(meth) acrylate, bisphenol A diglycidyl ether di(meth)acrylate, tetraethylene glycol di(meth)acrylate, hydroxypivalic acid neopentyl glycol diacrylate, neopentyl glycol di(meth)acrylate, 1,4-butanediol diacrylate, 1,3-butylene glycol di(meth)acrylate, dicyclopentanyl di(meth)acrylate, polyethylene glycol diacrylate, 1,4-butanediol oligoacrylate, neopentyl glycol oligoacrylate, 1,6-hexanediol oligoacrylate, trimethylolpropane tri(meth)acrylate, trimethylolpropane ethoxy tri(meth)acrylate, trimethylolpropane propoxy tri(meth)acrylate, pentaerythritol tri(meth)acrylate, glyceryl propoxy tri(meth)acrylate, trimethylolpropane trimethacrylate, trimethylolpropane ethylene oxide adduct triacrylate, glycerin propylene oxide adduct triacrylate, and pentaerythritol tetraacrylate.

The hard coat layer preferably comprises an active energy ray curable resin or a thermosetting resin, and more preferably comprises an active energy ray curable resin. As an active energy ray curable resin, any resin can be used as long as it is active energy ray curable. The active energy ray curable resin may be, for example, a (meth)acrylate polymer, and more specific examples thereof may include an epoxy (meth)acrylate polymer and a polyester (meth)acrylate polymer. **In** particular, polymers having a (meth)acryloyl group, for example, (meth)acrylate polymers having a (meth) acryloyl group, are preferably used. More specific examples thereof may include epoxy (meth)acrylate polymers having a (meth)acryloyl group and polyester (meth)acrylate polymers having a (meth)acryloyl group. Active energy ray curable resins are readily available from various companies. Hereinafter, polymers having a (meth)acryloyl group are also referred to as "(meth)acryloyl polymers."

It is to be noted that, in the present description, "(meth)acrylate" refers to methacrylate and/or acrylate, and "(meth)acryloyl group" refers to a methacryloyl group and/or an acryloyl group. Other similar terms are also interpreted as described above.

- Epoxy (meth)acrylate polymer

The active energy ray curable resin may be, for example, an epoxy (meth)acrylate polymer. Among others, an epoxy (meth)acrylate polymer having a (meth)acryloyl group is preferable. A synthetic example of epoxy (meth)acrylate is shown in the formula (1) shown below. Epoxy (meth)acrylate can be obtained by adding acrylic acid or methacrylic acid, etc., having an unsaturated bond to an epoxy compound.

[Formula 4]

R R' OH O → R O O OH R' (1)

wherein R represents an alkyl group containing 1 to 12 carbon atoms or a hydrogen atom, wherein the alkyl group may be substituted with one or more substituents selected from the group consisting of an epoxy group, a hydroxyl group, an acryloyl group and a methacryloyl group; and R' represents a methyl group or a hydrogen atom.

The epoxy (meth)acrylate polymer can be obtained, for example, by copolymerizing (meth)acrylic acid with (meth)acrylic acid glycidyl ether to synthesize an epoxy resin having a (meth)acrylate skeleton, and then adding acrylic acid, methacrylic acid or the like to this epoxy resin. A synthetic example thereof is shown in the following formula (2).

[Formula 5]

(2)

A preferred epoxy (meth)acrylate polymer may be, for example, one having a repeating unit shown in the following formula (I).

[Formula 6]

n m p O O q (I)

wherein m represents an alkylene group containing 1 to 4 carbon atoms or a single bond; n represents an alkyl group containing 1 to 4 carbon atoms or a hydrogen atom; p represents a single bond or an alkylene group containing 1 or 2 carbon atoms; and q represents an alkyl group containing 1 to 12 carbon atoms, which may have one or more substituents selected from the group consisting of an epoxy group, a hydroxyl group, an acryloyl group and a methacryloyl group, or a hydrogen atom.

In the above formula (I), preferably, m represents an alkylene group containing 1 or 2 carbon atoms; n represents an alkyl group containing 1 or 2 carbon atoms; p represents a single bond or a methylene group; and q represents an alkyl group containing 1 to 6 carbon atoms, which may have one or more substituents selected from the group consisting of an epoxy group, a hydroxyl group and an acryloyl group, or a hydrogen atom. More preferably, m represents a methylene group; n represents a methyl group; p represents a single bond; and q represents an alkyl group containing 5 or less carbon atoms, which may have one or more substituents selected from the group consisting of a methyl group and an epoxy group, or an alkyl group containing 8 or less carbon atoms, which may have one or more substituents selected from a hydroxyl group and an acryloyl group.

Specific examples of the repeating unit represented by the formula (I) may include those represented by the following formula (II-a), formula (II-b) and formula (II-c):

[Formula 7]

(II-a) (II-b) (II-c)

- Polyester (meth)acrylate polymer

The polymer having a (meth)acryloyl group may be a polyester (meth)acrylate polymer. Examples of the polyester (meth)acrylate polymer may include polymers obtained by a dehydration condensation reaction of (meth) acrylic acid, polybasic carboxylic acid (anhydride), and polyol. Examples of the polybasic carboxylic acid (anhydride) used in such a dehydration condensation reaction may include succinic acid (anhydride), adipic acid, maleic acid (anhydride), itaconic acid (anhydride), trimellitic acid (anhydride), pyromellitic acid (anhydride), hexahydrophthalic acid (anhydride), phthalic acid (anhydride), isophthalic acid, and terephthalic acid. On the other hand, examples of the polyol used in the dehydration condensation reaction may include 1,4-butanediol, 1,6-hexanediol, diethylene glycol, triethylene glycol, propylene glycol, neopentyl glycol, dimethylolheptane, dimethylolpropionic acid, dimethylolbutyric acid, trimethylolpropane, ditrimethylolpropane, pentaerythritol, and dipentaerythritol.

Specific examples of the polyester (meth)acrylate polymer may include: ARONIX M-6100, ARONIX M-7100, ARONIX M-8030, ARONIX M-8060, ARONIX M-8530, and ARONIX M-8050 (these are trade names of polyester (meth) acrylate oligomers manufactured by TOAGOSEI CO., LTD.); Laromer PE44F, Laromer LR8907, Laromer PE55F, Laromer PE46T, and Laromer LR8800 (these are trade names of polyester (meth)acrylate oligomers manufactured by BASF Corporation); Ebecryl 80, Ebecryl 657, Ebecryl 800, Ebecryl 450, Ebecryl 1830, and Ebecryl 584 (these are trade names of polyester (meth)acrylate oligomers manufactured by Daicel-UCB Co., Ltd.); and Photomer RCC13-429 and Photomer 5018 (these are trade names of polyester (meth)acrylate oligomers manufactured by SAN NOPCO Ltd.).

The hard coating composition used in the present invention can comprise a surface modifier. The surface modifier is a substance that changes the surface performance of the hard coat layer, such as a leveling agent, a light stabilizer, and an ultraviolet absorber.

As leveling agents, a silicone-based leveling agent, an acrylic-based leveling agent, and a fluorine-based leveling agent are preferably used. Examples of the leveling agent may include polyether-modified polyalkylsiloxane, polyether-modified siloxane, polyester-modified hydroxyl group-containing polyalkylsiloxane, polyether-modified polydimethylsiloxane having an alkyl group, modified polyether, and silicone-modified acrylic.

The content of the leveling agent is preferably 0.01 to 3 parts by mass, and more preferably 0.01 to 1 part by mass, with respect to 100 parts by mass of the (meth)acryloyl polymer comprised in the hard coating composition.

As silicone-based leveling agents mentioned above, commercially available products can be used, and examples thereof may include: BYK-300, BYK-302, BYK-306, BYK-307, BYK-310, BYK-313, BYK-315N, BYK-320, BYK-322, BYK-323, BYK-325, BYK-326, BYK-330, BYK-331, BYK-333, BYK-342, BYK-370, BYK-375, BYK-377,

BYK-378, and BYK-3760 (manufactured by BYK); DISPARLON 1711EF, DISPARLON 1761, DISPARLON LS-001, DISPARLON LS-050, DISPARLON LS-280, DISPARLON LS-460, and DISPARLON LS-480 (manufactured by Kusumoto Chemicals, Ltd.); and Tego Flow 425, Tego Glide 100, Tego Glide 110, Tego Glide 130, Tego Glide 406, Tego Glide 420, Tego Glide 432, Tego Glide 435, Tego Glide 440, Tego Glide 450, Tego Glide 482, Tego Glide 485, Tego Glide ZG400, Tego wet KL245, Tego wet 250, Tego wet 260, Tego wet 265, Tego wet 270, and Tego wet 280 (manufactured by Evonic Tego Chemie). These may be used alone as a single type, or may also be used in combination of two or more types.

As acrylic-based leveling agents mentioned above, commercially available products can be used, and examples thereof may include: BYK-350, BYK-354, BYK-355, BYK-356, BYK-358N, BYK-361N, BYK-392, BYK-394, and BYK-3441 (manufactured by BYK);DISPARLON LF-1983, DISPARLON LF-1984, LF-1985, DISPARLON UVX-35, and DISPARLON UVX-36 (manufactured by Kusumoto Chemicals, Ltd.); Tego Flow 300, Tego Flow 370, Tego Flow ATF2, and Tego Flow ZFS460. These may be used alone as a single type, or may also be used in combination of two or more types.

As other types of leveling agents other than the above-described leveling agents, commercially available products can be used. Examples of the commercially available leveling agent may include BYK-399, BYK-3440, BYK-3550, BYK-3560, BYK-3565, BYK-SILCLEAN 3700, BYK-SILCLEAN 3701, and BYKETOL-OK (manufactured by BYK); and DISPARLON UVX-272, DISPARLON UVX-2285, DISPARLON LHP-810, DISPARLON NSH-8430HF, DISPARLON LHP-90, DISPARLON LHP-91, DISPARLON LHP-95, and DISPARLON LHP-96 (manufactured by Kusumoto Chemicals, Ltd.). These may be used alone as a single type, or may also be used in combination of two or more types.

As fluorine-based leveling agent described above, commercially available fluorine-based leveling agents can be used. Examples of the commercially available fluorine-based leveling agent may include: Optool series of leveling agents manufactured by Daikin Industries, Ltd. ("DSX" and "DAC-HP"); Surflon series of leveling agents manufactured by AGC SEIMI CHEMICAL CO., LTD. ("S-242," "S-243," "S-420," "S-611," "S-651," "S-386," etc.); BYK series of leveling agents manufactured by BYK Japan KK ("BYK-340," etc.); AC series of leveling agents manufactured by Algin Chemie ("AC 110a," "AC 100a," etc.); MEGAFACE series of leveling agents manufactured by DIC Corporation ("MEGAFACE F-114," "MEGAFACE F-410," "MEGAFACE F-444," "MEGAFACE EXP TP-2066," "MEGAFACE F-430," "MEGAFACE F-472SF," "MEGAFACE F-477," "MEGAFACE F-552," "MEGAFACE F-553," "MEGAFACE F-554," "MEGAFACE F-555," "MEGAFACE R-94," "MEGAFACE RS-72-K," "MEGAFACE RS-75," "MEGAFACE F-556," "MEGAFACE EXP TF-1367," "MEGAFACE EXP TF-1437," "MEGAFACE F-558," "MEGAFACE EXP TF-1537," etc.); FC series of leveling agents manufactured by Sumitomo 3M Limited ("FC-4430," "FC-4432," etc.); Ftergent series of leveling agents manufactured by NEOS Corporation ("Ftergent 100," "Ftergent 100C," "Ftergent 110," "Ftergent 150," "Ftergent 150CH," "Ftergent A-K," "Ftergent 501," "Ftergent 250," "Ftergent 251," "Ftergent 222F," "Ftergent 208G," "Ftergent 300," "Ftergent 310," "Ftergent 400SW," "Ftergent 602A," "Ftergent 650AC," "Ftergent 681A," "Ftergent 684A," etc.); and PF series of leveling agents manufactured by KITAMURA CHEMICALS CO., LTD. ("PF-136A," "PF-156A," "PF-151N," "PF-636," "PF-6320," "PF-656," "PF-6520," "PF-651," "PF-652," "PF-3320," etc.).

Examples of the light stabilizer that can be used herein may include hindered amine-based compounds such as Tinuvin123 (manufactured by BASF Corporation), Tinuvin770DF (manufactured by BASF Corporation), Tinuvin144 (manufactured by BASF Corporation), and LA-81 (manufactured by ADEKA Corporation).

Examples of the ultraviolet absorber that can be used herein may include DAINSORB-T0 (manufactured by Daiwa Kasei), Tinuvin 405 (manufactured by BASF Corporation), Tinuvin 477 (manufactured by BASF Corporation), Tinuvin 479 (manufactured by BASF Corporation), Tinuvin 928 (manufactured by BASF Corporation), and UVA-903KT(manufactured by BASF Corporation).

The hard coating composition used in the present invention may comprise a photopolymerization initiator. In the present description, the photopolymerization initiator refers to a photoradical generator.

The photopolymerization initiator that can be used in the present invention is preferably active energy ray curable or thermosetting, is more preferably active energy ray curable, and is particularly preferably ultraviolet-curable. Examples of the photopolymerization initiator used herein may include IRGACURE 184 (1-hydroxy-cyclohexyl-phenyl-ketone), IRGACURE 1173 (2-hydroxy-2-methyl-1-phenyl-propan-1-one), IRGACURE TPO (2,4,6-trimethylbenzoyl-diphenyl-phosphine oxide), IRGACURE 819 (bis(2,4,6-trimethylbenzoyl)-phenylphosphine oxide), and EsacureONE (oligo(2-hydroxy-2-methyl-1-[4-(1-methylvinyl)phenyl]propanone) From the viewpoint of heat resistance, among these, Esacure One, etc. is preferable as a photopolymerization initiator.

The content of the photopolymerization initiator is preferably 0.01 to 10 parts by mass, more preferably 0.05 to 7 parts by mass, and particularly preferably 0.1 to 5 parts by mass, with respect to 100 parts by mass of the (meth)acryloyl polymer comprised in the hard coating composition.

The hard coating composition used in the present invention can comprise one or more types of monomers.

With regard to the monomers that can be used in the present invention, examples of monofunctional acrylic monomers may include Light Acrylate IAA (Kyoeisha Chemical Co., Ltd.), Light Acrylate PO-A (manufactured by Kyoeisha Chemical Co., Ltd.), Light Acrylate IB-XA (Kyoeisha Chemical Co., Ltd.), HOA-MS(N) (manufactured by Kyoeisha Chemical Co., Ltd.), and Light Acrylate 9EG-A (manufactured by Kyoeisha Chemical Co., Ltd.). Examples of bifunctional

acrylic monomers may include Light Acrylate 1.6HX-A (manufactured by Kyoeisha Chemical Co., Ltd.), Light Acrylate DCP-A (manufactured by Kyoeisha Chemical Co., Ltd.), Light Acrylate BP-4EAL (manufactured by Kyoeisha Chemical Co., Ltd.), and Light Acrylate BP-4PA (manufactured by Kyoeisha Chemical Co., Ltd.). Examples of multifunctional acrylates may include Light Acrylate TMP-A (manufactured by Kyoeisha Chemical Co., Ltd.), Light Acrylate PE-3A (manufactured by Kyoeisha Chemical Co., Ltd.), Light Acrylate PE-4A (manufactured by Kyoeisha Chemical Co., Ltd.), and Light Acrylate DPE-6A (manufactured by Kyoeisha Chemical Co., Ltd.). The above-described acrylic monomers can be preferably used.

The content of the monomers is preferably more than 0% by mass and 50% by mass or less, and more preferably more than 0% by mass and 30% by mass, based on to the total mass of the hard coating composition.

The method of forming a hard coat layer is not particularly limited. For example, a hard coat layer can be formed by applying a hard coating composition to a layer located below the hard coat layer and then photopolymerizing it.

The method of applying a hard coating composition s not particularly limited, and a known method can be used. Examples of the method may include a spin coating method, a dipping method, a spraying method, a slide coating method, a bar coating method, a roll coating method, a gravure coating method, a meniscus coating method, a flexographic printing method, a screen **printing** method, a beat coating method, and a brushing method.

The lamp used for light irradiation in photopolymerization is a lamp having an emission distribution with a wavelength of 420 nm or less. Examples of the lamp may include a low-pressure mercury lamp, a medium-pressure mercury lamp, a high-pressure mercury lamp, an ultra-high-pressure mercury lamp, a chemical lamp, a black light lamp, a microwave-excited mercury lamp, and a metal halide lamp. Among these, the high-pressure mercury lamp or the metal halide lamp is preferable because these lamps efficiently emit a light in the active wavelength range of the initiator, and do not emit much a short-wavelength light that would reduce the viscoelastic properties of the resulting polymer by crosslinking, or a long-wavelength light that would heat and evaporate the reaction composition.

For the purpose of improving the adhesion of the hard coat layer, the coating surface may be pretreated in some cases. Examples of the treatment method may include known methods such as a sandblasting method, a solvent treatment method, a corona discharge treatment method, a chromic acid treatment method, a flame treatment method, a hot air treatment method, an ozone treatment method, and an ultraviolet treatment method.

**In** one embodiment of the present invention, the indenter hardness H_IT [N/mm$^2$] on the surface of the hard coat layer preferably satisfies 30 [N/mm$^2$] < indenter hardness H_IT < 240 [N/mm$^2$], more preferably satisfies 50 [N/mm$^2$] < indenter hardness H_IT < 240 [N/mm$^2$], and particularly preferably satisfies 100 [N/mm$^2$] < indenter hardness H_IT < 240 [N/mm$^2$]. When the indenter hardness is within the above-described range, the hard coat layer has sufficient hardness to meet solvent resistance and does not affect moldability, which is favorable. It is to be noted that the indenter hardness can be measured by the method described in the after-mentioned Examples.

In one embodiment of the present invention, when the hard coat layer is scratched by moving #0000 steel wool back and forth 15 times under a pressure of 100 gf/cm$^2$, the absolute value ($\Delta$H) of a difference in the haze values between before and after the scratching is preferably less than 10%, more preferably less than 7%, and particularly preferably less than 5%. It is to be noted that the $\Delta$H can be measured by the method described in the after-mentioned Examples.

The film thickness of the hard coat layer is desirably 0.2 $\mu$m or more and 40 $\mu$m or less, and more desirably 0.4 $\mu$m or more and 10 $\mu$m or less. When the hard coat layer has a film thickness of 0.4 $\mu$m or more, sufficient hardness can be obtained. When the hard coat layer has a film thickness of 40 $\mu$m or less, generation of cracks during bending can be suppressed. It is to be noted that the film thickness of the hard coat layer can be measured by observing the cross section with a microscope, etc., and actually measuring from the coating interface to the surface.

In one embodiment of the present invention, it is preferable that there are no 19 mmH cracks in pressure forming.

One side or both sides of the thermoforming laminate of the present invention can be treated with any one or more of an anti-reflection treatment, an anti-fouling treatment, an anti-static treatment, a weather-resistance treatment, and an anti-glare treatment. The methods for the anti-reflection treatment, anti-fouling treatment, anti-static treatment, weather-resistance treatment, and anti-glare treatment are not particularly limited, and known methods can be used. Examples of the methods may include a method of applying a reflection-reducing paint, a method of vapor-depositing a dielectric thin film, and a method of applying an anti-static paint.

< Printing layer >

A printing layer (e.g., a printing layer formed by gravure printing, screen printing, wet coating, etc.) may be established on the hard coat layer of the thermoforming laminate of the present invention. Methods for forming the printing layer may include: a method of printing a desired design directly on the hard coat layer by gravure printing, etc., and then heating and drying it; and a method of transcribing a printing layer formed by printing on a transfer sheet such as a biaxially oriented PET film on the thermoforming laminate by heat transfer, etc. For example, a polyester-based, polycarbonate-based, acrylic-based, or urethane-based printing ink can be used for printing. In particular, when there is a problem regarding adhesion to the hard coat layer, a surface treatment such as plasma, ion etching, or corona discharge is used to

modify the surface, so that the adhesion can be enhanced. Moreover, there is also applied a method of establishing a metal layer, a metal oxide layer or the like on the hard coat layer using physical vapor deposition or chemical vapor deposition to form a printing layer.

The printing layer may be directly laminated on the hard coat layer, or in order to improve adhesion with the hard coat layer, the printing layer may also be laminated via a primer layer. The primer layer can be formed by applying a known primer agent onto the hard coat layer.

The pattern of the printing layer is not particularly limited, and it may be the pattern of the material of the printing layer itself, or it may include pictures, letters, etc. Examples of such patterns may include wood grain, stone grain, cloth grain, sand grain, woven grain, bark grain, geometric patterns, letters, tile patterns, brickwork patterns, marquetry patterns, patchwork patterns, hairline patterns, solid wood, patterned patterns, and Japanese paper patterns.

The color of the printing layer is not particularly limited, and it may be the color of the material itself of the printing layer, or it may also be the color of a colorant. Examples of such colors may include black, white, red, blue, green, yellow, metallic colors, polarized colors, and structural colors. Also, the printing layer may have luster or gloss, or may also be matted , and for example, it may be metallic, piano black, carbon, satin, or pearlescent finishes.

The film thickness of the printing layer may be 0.01 to 30 μm. This film thickness may be the film thickness when the printing layer is formed by printing or vapor deposition. If the pattern of the material of the printing layer itself is adopted as a pattern of the printing layer, the product itself can be used as a printing layer described above, and thus, there are no restrictions at all on the film thickness (size) of the printing layer.

The printing layer can be formed by methods such as, for example, printing, coating, plating, vapor deposition, sputtering, ion plating, molding, polishing, or etching.

The above-described printing methods may include an offset printing method, a gravure rotary printing method, a screen printing method, a roll coating method, a spray coating method, and a flexographic printing method. As a printing ink used in the above-described printing, a mixture formed by mixing a binder with an appropriate amount of pigment, solvent, stabilizer, plasticizer, catalyst, hardener, etc., can be used. Examples of the binder that can be used herein may include resins such as a polyurethane resin, a vinyl chloride-vinyl acetate copolymer resin, a vinyl chloride-vinyl acetate-acrylic copolymer resin, a chlorinated polypropylene resin, an acrylic resin, a polyester resin, a polyamide resin, a butyral resin, a polystyrene resin, a nitrocellulose resin, and a cellulose acetate resin, as well as compositions of these resins.

< Adhesive layer >

On the hard coat layer of the thermoforming laminate of the present invention, a printing layer, an adhesive layer, and a backer material are further laminated in this order.

In the present invention, the adhesive layer is not particularly limited. As an example, the adhesive layer consists of various types of adhesives, gluing agents, pressure-sensitive adhesives, and the like. The adhesive is not particularly limited. As an example, the adhesive consists of resins such as an acrylic resin, a urethane resin, a urethane-modified polyester resin, a polyester resin, an epoxy resin, an ethylene-vinyl acetate copolymer resin (EVA), a vinyl resin (vinyl chloride, vinyl acetate, and a vinyl chloride-vinyl acetate copolymer resin), a styrene-ethylene-butylene copolymer resin, a polyvinyl alcohol resin, a polyacrylamide resin, a polyacrylamide resin, and isobutylene rubber, isoprene rubber, natural rubber, SBR, NBR and silicone rubber. These resins may be dissolved in a solvent, as appropriate, before use, or may also be used without solvents.

The thickness of the adhesive layer is not particularly limited. As an example, the thickness of the adhesive layer is preferably 2 μm or more, more preferably 4 μm or more. On the other hand, the thickness of the adhesive layer is preferably 40 μm or less, and more preferably 30 μm or less. If the thickness of the adhesive layer is within the above-described range, the obtained thermoforming laminate is further excellent in terms of appearance and adhesiveness, upon adhesion.

By adding a color pigment to the adhesive layer, a design feature may be imparted to the adhesive layer. Moreover, by mixing an antistatic agent or the like into the adhesive layer, functionality such as antistatic effects may be imparted to the adhesive layer. Thereby, the adhesion properties of the adhesive layer can be improved.

The method of forming the adhesive layer is not particularly limited. As an example, the adhesive layer may be formed by applying a resin solution constituting the adhesive layer, which is dissolved in an appropriate solvent, onto a backer material, using a roll coater or the like, and then adhering the backer material with the formed adhesive layer thereon to the printing layer. Alternatively, the adhesive layer may be formed by directly applying the resin solution onto the printing layer. Otherwise, a pre-made product with an adhesive layer established on the backer material may also be used. The method of forming the adhesive layer can be selected, as appropriate, depending on the characteristics of the adhesive or gluing agent used.

< Backer material >

In the thermoforming laminate of the present invention a backer material (backing sheet) may be established on the adhesive layer. This backer material is preferably established, when a film insert method is adopted to produce the thermoforming laminate. The backer material is not particularly limited. As an example, the backer material may be a thermoformable polymer sheet, and an ABS sheet, a polyacrylic sheet, a polypropylene sheet, a polyethylene sheet, a polycarbonate sheet, an A-PET sheet, a PET-G sheet, a polyvinyl chloride (PVC) sheet, a polyamide sheet and the like are preferable.

The thickness of the backer material is not particularly limited. As an example, from the viewpoint of moldability in compression molding, etc., the thickness of the backer material is preferably 0.05 to 5 mm, and more preferably 0.1 to 3 mm.

As such a backer material, one, which is surface-processed as desired, may be used. The surface processing is not particularly limited. Examples of the surface processing may include matte processing, satin processing, embossing, hair-lining, and various types of patterns.

As such a backer material, one on which an adhesive layer has previously been established may be used, or an adhesive layer may be formed on the backer material and the backer material may be then adhered to the printing layer, such that the adhesive layer can be contacted with the printing layer.

Thereafter, the thermoforming laminate of the present invention is appropriately processed into a three-dimensional shape to produce a molded product. The method of molding the molded product is not particularly limited. Examples of the molding method may include vacuum forming and TOM (Three Dimension Overlay Method) molding. In the TOM molding, the thermoforming laminate is applied to a previously prepared adherend, and is then softened by heat, so that it is integrally molded to conform to the adherend. On the other hand, in the vacuum forming, the thermoforming laminate is heated and softened by a heater. Thereafter, the heated thermoforming laminate is pressed against a desired three-dimensional shaped mold while applying vacuum aspiration, so that it is deformed to conform to the shape of the three-dimensional molded product.

Examples

Hereinafter, the present invention will be specifically described in the following examples. However, the present invention is not limited at all by these examples.

(Example 1)

To 100 parts by mass of the ultraviolet-curable (meth)acryloyl polymer (OAP-2531, manufactured by Negami Chemical Industrial Co., Ltd.), 3 parts by mass of the photopolymerization initiator ESACURE-ONE (manufactured by DKSH Japan) and 1 part by mass of the silicone-based leveling agent BYK-3550 (manufactured by BYK Japan K.K.) were added. After that, PGM (polypropylene glycol monomethyl ether) was added as a dilution solvent to a solid concentration of 15% by mass, and was then stirred to obtain a hard coating composition.

DF02U (manufactured by MITSUBISHI GAS CHEMICAL COMPANY, INC., thickness: 0.254 mm), a two-layer product consisting of a bisphenol A-type polycarbonate resin and PMMA (methyl methacrylate), was prepared as a base material layer. The hard coating composition obtained above was applied onto the side of the bisphenol A-type polycarbonate resin of the base material layer. The application step was carried out using a #5.0 wire-wound rod, and the applied hard coating composition was dried at 80°C for 1 minute. Thereafter, the resultant was irradiated with 400 mJ/cm$^2$ of UV light using a UV irradiator (manufactured by Heraeus K.K.) to produce a thermoforming laminate. The resulting hard coat layer had a film thickness of 4.0 μm.

(Example 3)

A thermoforming laminate was produced in the same manner as that of Example 1, with the exception that 100 parts by mass of the ultraviolet-curable (meth)acryloyl polymer(OAP-5000, manufactured by Negami Chemical Industrial Co., Ltd.) was used.

(Example 7)

A thermoforming laminate was produced in the same manner as that of Example 1, with the exception that 10 parts by mass of monofunctional acrylic monomer (POB-A, manufactured by Kyoeisha Chemical Co., Ltd.) was added to 90 parts by mass of the ultraviolet-curable (meth)acryloyl polymer(OAP-5000, manufactured by Negami Chemical Industrial Co., Ltd.).

(Example 8)

A thermoforming laminate was produced in the same manner as that of Example 1, with the exception that 30 parts by mass of monofunctional acrylic monomer (POB-A, manufactured by Kyoeisha Chemical Co., Ltd.) was added to 70 parts by mass of the ultraviolet-curable (meth)acryloyl polymer(OAP-5000, manufactured by Negami Chemical Industrial Co., Ltd.).

(Example 10)

A thermoforming laminate was produced in the same manner as that of Example 1, with the exception that 100 parts by mass of the ultraviolet-curable (meth)acryloyl polymer (MAP-7000, manufactured by Negami Chemical Industrial Co., Ltd.)was used.

(Example 2, 4 to 6, 9, and 11 to 13)

A thermoforming laminate was produced in the same manner as that of Example 1, with the exception that the materials shown in Table 1 below were used in the volumes shown in Table 1 below.

(Example 14)

A thermoforming laminate was produced in the same manner as that of Example 3, with the exception that FS-2000 (manufactured by MITSUBISHI GAS CHEMICAL COMPANY, INC., thickness: 0.254 mm) that is a polycarbonate film was used as a base material layer.

(Comparative Example 1)

A thermoforming laminate was produced in the same manner as that of Example 1, with the exception that 100 parts by mass of the ultraviolet-curable (meth)acryloyl polymer (MAP-4050, manufactured by Negami Chemical Industrial Co., Ltd.) was used.

(Comparative Example 2)

A thermoforming laminate was produced in the same manner as that of Example 1, with the exception that 100 parts by mass of the ultraviolet-curable (meth)acryloyl polymer (SMP-220A, manufactured by Kyoeisha Chemical Co., Ltd.) was used.

(Comparative Example 4)

A thermoforming laminate was produced in the same manner as that of Example 1, with the exception that 100 parts by mass of the ultraviolet-curable urethane acrylate (KRM 7735, manufactured by Daicel-Allnex Ltd.) was used.

(Comparative Example 5)

A thermoforming laminate was produced in the same manner as that of Example 1, with the exception that 100 parts by mass of the ultraviolet-curable urethane acrylate (EBECRYL 8411, manufactured by Daicel-Allnex Ltd.) was used.

(Comparative Example 3)

A thermoforming laminate was produced in the same manner as that of Example 1, with the exception that the materials shown in Table 1 below were used in the volumes shown in Table 1 below.

Regarding the thermoforming laminates produced above, various physical properties were evaluated as follows.

< Initial adhesion >

The obtained thermoforming laminates were each evaluated in terms of adhesion between the base material layer and the hard coat layer. Adhesion was evaluated in accordance with the evaluation method of JIS K5600-5-6: 1999. After peeling, the grid was checked, and the adhesion was evaluated as o if peeling occurred in 20% or less of the squares,

and the adhesion was evaluated as x if peeling occurred in more than 20% of the squares.

< Moldability >

The obtained thermoformed laminates were preheated for approximately 40 seconds, so that the film temperature became 190°C. Immediately afterwards, the resulting laminates were subjected to pressure forming using a mold having a rectangular protrusion, at a deep drawing height, using 2.5 MPa pressurized air. It is to be noted, for pressure forming, a right angle-shaped mold having 30 mm in both length and width sizes was used, with a radius R of 1 mm and a height of 19 mm in the area contacted with the right angle shape of the mold. Visual inspection was performed on the edges of the thermoformed laminates, i.e., the area bent along the mold. Those with neither whitening nor cracking were evaluated as o, and those with either whitening or cracking were evaluated as x.

< Chemical Resistance Test >

Regarding the obtained thermoforming laminates, a 1 cm square piece of filter paper was placed on the surface coated with the hard coat layer, and one drop of each solvent (methanol, ethanol, isopropyl alcohol, acetone, toluene, methyl ethyl ketone, or ethyl acetate) was dropped onto it and was then left for one minute. After that, the resulting appearance was compared to the appearance before the solvent had been dropped, and the degree of observing swelling or whitening was evaluated on a four-point scale.

1 : No change in appearance with all solvents.
2: Swelling or whitening were observed with one to two types of solvents.
3: Swelling or whitening were observed with three types of solvents.
4: Swelling or whitening were observed with four to seven types of solvents.

< Nanoindenter hardness >

Regarding the hard coat layers of the thermoforming laminates obtained in the Examples and Comparative Examples, the nanoindenter hardness of the cross section in the thickness direction was measured using an ultra-microindentation hardness tester (ENT-NEXUS, manufactured by Elionix Inc.) under the following conditions. The measurement position was set to be the center portion of the hard coat layer, and the average of nine measurement points close to the center portion of the thickness direction was set to be the indentation hardness (N/mm$^2$).

Indenter: Berkovich indenter (vertical angle 65.03°)
Surface detection: Indentation depth was set to achieve a displacement of 300 nm.
Retention time: 5 seconds, 10 mN
Set temperature: 30°C
Instrument installation environment: 23°C, 50% RH

Using the above-described measurement results, the nanoindenter hardness was calculated in accordance with ISO 14577-1 2002-10-01 Part 1 (calculated using the instrument's built-in software ).

It is to be noted that, since the hardness of the sample changes due to moisture absorption, measurements were carried out after the sample had been left at rest for at least 24 hours in an environment of 23°C and 50% RH.

< Steel wool scratch resistance test >

The surface of the hard coat layer of each of the thermoforming laminates obtained in the Examples and Comparative Examples was scratched by moving #0000 steel wool back and forth 15 times at a pressure of 100 gf/cm$^2$. A hazemeter (HM-150, manufactured by Murakami Color Research Laboratory, Inc.) was used to measure the haze values before and after the scratching in accordance with JIS K 7136: 2000. The absolute value ($\Delta H$) of the difference in the haze values before and after the scratching was then calculated. The $\Delta H$ value of less than 10% was evaluated as o, and the $\Delta H$ value of 10% or greater was evaluated as x.

[Table 1]

| | | Examples | | | | | | | | | | | | | | Comparative Examples | | | | |
|---|---|---|---|---|---|---|---|---|---|---|---|---|---|---|---|---|---|---|---|---|
| Components | Materials | 1 | 2 | 3 | 4 | 5 | 6 | 7 | 8 | 9 | 10 | 11 | 12 | 13 | 14 | 1 | 2 | 3 | 4 | 5 |
| Acrylic polymer | MAP-4050 | | | | | | | | | | | | | | | 100 parts | | | | |
| | OAP-2531 | 100 parts | | | | | | | | | | | | | | | | | | |
| | OAP-5000 | | 100 parts | 100 parts | 100 parts | 100 parts | 100 parts | 90 parts | 70 parts | 30 parts | | | | | 100 parts | | | | | |
| | MAP-7000 | | | | | | | | | | 100 parts | 100 parts | 100 parts | 100 parts | | | | | | |
| | SMP-220A | | | | | | | | | | | | | | | | 100 parts | | | |
| | SMP-550AP | | | | | | | | | | | | | | | | | 100 parts | | |
| Urethane acrylate | KRM 7735 | | | | | | | | | | | | | | | | | | 100 parts | |
| | EBECRYL 8411 | | | | | | | | | | | | | | | | | | | 100 parts |
| Monomer | POB-A | | | | | | | 10 parts | 30 parts | 70 parts | | | | | | | | | | |
| Photopolymerization initiator | Esacure One | 3 parts | 0.05 parts | 3 parts | 3 parts | 3 parts | 5 parts | 3 parts | 3 parts | 3 parts | 3 parts | 3 parts | 3 parts | 3 parts | 3 parts | 3 parts | 3 parts | 3 parts | 3 parts | 3 parts |
| Leveling agent | BYK-3550 | 1 part | 1 part | 1 part | 0.005 parts | | 1 part | 1 part | 1 part | 1 part | 1 part | | | | 1 part | 1 part | 1 part | 1 part | 1 part | 1 part |
| | BYK-3565 | | | | | | | | | | | 1 part | | | | | | | | |
| | BYK-UV3535 | | | | | | | | | | | | 1 part | | | | | | | |
| | FT-602A | | | | | 1 part | | | | | | | | 1 part | | | | | | |
| Double bond equivalent | | 4000 | 2000 | 2000 | 2000 | 2000 | 2000 | 2000 | 2000 | 2000 | 1000 | 1000 | 1000 | 1000 | 2000 | 10000 | 220 | 550 | 7000 | 1500 |
| Initial adhesion | 5 x 5 Squares/○× evaluation | ○ | ○ | ○ | ○ | ○ | ○ | ○ | ○ | ○ | ○ | ○ | ○ | ○ | ○ | ○ | × | × | ○ | ○ |
| Modability | Stretching 19mmH | ○ | ○ | ○ | ○ | ○ | ○ | ○ | ○ | ○ | ○ | ○ | ○ | ○ | ○ | ○ | × | × | × | ○ |
| Chemical resistance | 4-Stage evaluation | 2 | 2 | 2 | 2 | 2 | 3 | 2 | 2 | 3 | 1 | 1 | 1 | 1 | 2 | 4 | 1 | 1 | 3 | 4 |
| Indenter hardness_H_IT | $N/mm^2$ | 116.63 | 153.14 | 153.77 | 158.39 | 161.11 | 168.52 | 176.64 | 207.75 | 237.26 | 177.76 | 179.89 | 179.74 | 180 | 151 | 18.41 | 359.13 | 248.45 | 22.10 | 13.23 |
| Steel wool scratch resistance test | Δ Haze less than 10% | ○ | ○ | ○ | ○ | ○ | ○ | ○ | ○ | ○ | ○ | ○ | ○ | ○ | × | ○ | ○ | ○ | ○ | ○ |

## Claims

1. A thermoforming laminate, comprising:

a base material layer having a layer comprising a polycarbonate resin, and a hard coat layer laminated on one surface of the base material layer, wherein

the hard coat layer is formed by polymerizing and curing a hard coating composition comprising a (meth)acryloyl polymer having a double bond equivalent of 800 to 7000.

**2.** The thermoforming laminate according to claim 1, wherein the base material layer is a laminate of a layer comprising a polycarbonate resin and a layer comprising an acrylic resin, and the hard coat layer is laminated on the layer comprising a polycarbonate resin.

**3.** The thermoforming laminate according to claim 1 or 2, wherein the hard coating composition further comprises a leveling agent.

**4.** The thermoforming laminate according to claim 3, wherein the leveling agent is a silicone-based leveling agent or a fluorine-based leveling agent, and a content of the leveling agent is 0.01 to 3 parts by mass, with respect to 100 parts by mass of the (meth)acryloyl polymer contained in the hard coating composition.

**5.** The thermoforming laminate according to any one of claims 1 to 4, wherein the hard coating composition is energy ray curable.

**6.** The thermoforming laminate according to any one of claims 1 to 5, wherein the hard coating composition further comprises a photopolymerization initiator.

**7.** The thermoforming laminate according to claim 6, wherein a content of the photopolymerization initiator is 0.1 to 5 parts by mass, with respect to 100 parts by mass of the (meth)acryloyl polymer contained in the hard coating composition.

**8.** The thermoforming laminate according to any one of claims 1 to 7, wherein the hard coating composition comprises one or more types of monomers.

**9.** The thermoforming laminate according to claim 8, wherein a content of the monomers is greater than 0% by mass and 50% by mass or less, based on a total weight of the hard coating composition.

**10.** The thermoforming laminate according to any one of claims 1 to 9, wherein an indenter hardness H_IT [N/mm$^2$] on a surface of the hard coat layer satisfies 30 [N/mm$^2$] < indenter hardness H_IT < 240 [N/mm$^2$].

**11.** The thermoforming laminate according to any one of claims 1 to 10, wherein there are no 19 mmH cracks in pressure forming.

**12.** The thermoforming laminate according to any one of claims 1 to 11, which further comprises a printing layer on the hard coat layer.

**13.** The thermoforming laminate according to any one of claims 1 to 11, which is formed by further laminating a printing layer, an adhesive layer and a backer material in this order on the hard coat layer.

**14.** A molded product formed by molding the thermoforming laminate according to any one of claims 1 to 13.

## INTERNATIONAL SEARCH REPORT

International application No.
**PCT/JP2024/040061**

**A. CLASSIFICATION OF SUBJECT MATTER**

***B32B 27/36***(2006.01)i; ***B29C 51/10***(2006.01)i; ***B29C 51/14***(2006.01)i; ***B32B 27/08***(2006.01)i; ***B32B 27/30***(2006.01)i; ***C09D 133/00***(2006.01)i

FI: B32B27/36 102; B32B27/08; B32B27/30 A; B29C51/10; B29C51/14; C09D133/00

According to International Patent Classification (IPC) or to both national classification and IPC

**B. FIELDS SEARCHED**

Minimum documentation searched (classification system followed by classification symbols)

B32B27/00-27/42; B29C51/10; B29C51/14; C09D4/00-4/06,133/00-133/26

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/031967 A1 (MITSUBISHI GAS CHEMICAL COMPANY, INC.) 13 February 2020 (2020-02-13) paragraphs [0049], [0053]-[0056], table 2, comparative example 3, fig. 1 | 1-7, 10-11, 14 |
| A | | 8-9, 12-13 |
| Y | WO 2021/193809 A1 (MITSUBISHI GAS CHEMICAL COMPANY, INC.) 30 September 2021 (2021-09-30) claims 10, 15-16, paragraphs [0129]-[0131], tables 2-3, example 1 | 1-14 |
| Y | WO 2017/056196 A1 (TEIKOKU PRINTING INKS MFG CO., LTD.) 06 April 2017 (2017-04-06) claim 1, paragraphs [0047], [0066], table 1, examples 1, 10-15 | 1-14 |
| A | JP 2015-131925 A (NIPPON PAINT AUTOMOTIVE COATINGS CO., LTD.) 23 July 2015 (2015-07-23) tables 4-5, synthesis examples 16-17, examples 13-14, comparative example 4 | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 January 2025** | **10 February 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/040061**

**C. DOCUMENTS CONSIDERED TO BE RELEVANT**

| Category* | Citation of document, with indication, where appropriate, of the relevant passages | Relevant to claim No. |
|---|---|---|
| A | WO 2019/026460 A1 (DAICEL CORP.) 07 February 2019 (2019-02-07) claim 1, paragraph [0103], table 1, example 8 | 1-14 |
| A | US 2017/0121528 A1 (LG CHEM, LTD.) 04 May 2017 (2017-05-04) claims, preparation examples 1-3, examples 1-5 | 1-14 |
| A | US 2016/0311991 A1 (COVESTRO DEUTSCHLAND AG) 27 October 2016 (2016-10-27) claims, examples | 1-14 |

Form PCT/ISA/210 (second sheet) (July 2022)

**INTERNATIONAL SEARCH REPORT**
**Information on patent family members**

International application No.
**PCT/JP2024/040061**

| Patent document cited in search report | Publication date (day/month/year) | Patent family member(s) | Publication date (day/month/year) |
|---|---|---|---|
| WO 2020/031967 A1 | 13 February 2020 | US 2021/0324223 A1<br>paragraphs [0106]-[0107], [0114]-[0135], comparative example 3, table 2, fig. 1<br>EP 3835377 A1<br>CN 112534009 A<br>KR 10-2021-0042118 A<br>ES 2962722 T | |
| WO 2021/193809 A1 | 30 September 2021 | US 2023/0148217 A1<br>claims, paragraphs [0261]-[0263], tables 2-3, example 1<br>EP 4129618 A1<br>CN 115335227 A<br>KR 10-2022-0158706 A | |
| WO 2017/056196 A1 | 06 April 2017 | US 2017/0247564 A1<br>claim 1, paragraphs [0077], [0129], table 1, examples 1, 10-15<br>EP 3168267 A1<br>CA 2932925 A<br>IL 244774 A<br>CN 106332546 A<br>TW 201712079 A<br>MX 2016003984 A<br>BR 112016008600 A | |
| JP 2015-131925 A | 23 July 2015 | (Family: none) | |
| WO 2019/026460 A1 | 07 February 2019 | US 2020/0199372 A1<br>claim 9, paragraph [0144], table 1, example 8<br>EP 3663364 A1<br>TW 201910450 A | |
| US 2017/0121528 A1 | 04 May 2017 | WO 2015/194856 A1<br>KR 10-2015-0144716 A<br>CN 106459671 A | |
| US 2016/0311991 A1 | 27 October 2016 | WO 2014/198750 A1<br>EP 3008136 A1<br>TW 201510115 A<br>CN 105324443 A<br>KR 10-2016-0020428 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016060100 A